# EUROPÄISCHE PATENTSCHRIFT

(11) **EP 1 254 003 B1**
(45) Veröffentlichungstag und Bekanntmachung des Hinweises auf die Patenterteilung: **28.04.2004**
(21) Anmeldenummer: 01900417.5
(22) Anmeldetag: 10.01.2001
(51) Int. Cl.: B29C 45/16, B60R 13/02

(54) **VERFAHREN UND VORRICHTUNG ZUM HERSTELLEN EINES KUNSTSTOFF-FORMTEILES SOWIE KUNSTSTOFF-FORMTEIL**
METHOD AND DEVICE FOR PRODUCING A PLASTIC MOULDED PART AND PLASTIC MOULDED PART
PROCEDE ET DISPOSITIF POUR LA PRODUCTION D'UNE PIECE MOULEE EN PLASTIQUE, AINSI QUE PIECE MOULEE EN PLASTIQUE

(30) Priorität: 28.01.2000 DE 10004737
(43) Veröffentlichungstag der Anmeldung: 06.11.2002
(73) Patentinhaber: Volkswagen Aktiengesellschaft, 38436 Wolfsburg (DE)
(72) Erfinder: GABBERT, Heiko, 49377 Vechta (DE); BERLIN, Ralf, 39638 Wiepke (DE); MR CEK, Steffi, 39638 Gardelegen (DE)
(74) Vertreter: Schneider, Henry, Dipl.-Ing.
(86) Internationale Anmeldenummer: PCT/EP2001/000245
(87) Internationale Veröffentlichungsnummer: WO 2001/054881

(56) Entgegenhaltungen:
- EP-A- 0 491 682
- EP-A- 0 724 942
- WO-A-96/09160
- PATENT ABSTRACTS OF JAPAN vol. 2000, no. 7, 29. September 2000 (2000-09-29) -& JP 2000 117773 A (INOAC CORP), 25. April 2000 (2000-04-25) -& DATABASE WPI Week 200032 Derwent Publications Ltd., London, GB; AN 2000-369541 XP002164707
- PATENT ABSTRACTS OF JAPAN vol. 1999, no. 3, 31. März 1999 (1999-03-31) -& JP 10 315241 A (TOYOTA MOTOR CORP), 2. Dezember 1998 (1998-12-02)

## Beschreibung

Die Erfindung betrifft ein Verfahren und eine Vorrichtung zum Herstellen eines Kunststoff-Formteiles sowie ein Kunststoff-Formteil.

Aus der DE 197 34 686 A1 ist ein Kunststoff-Formteil sowie ein Verfahren und eine Vorrichtung zu dessen Herstellung bekannt. Die DE 197 34 686 A1 schlägt vor, ein Kunststoff-Formteil mit einem Kunststoff-Träger auszustatten, der mehrere Felder umfasst, wobei mindestens eines dieser Felder mit einem Abdeckmaterial kaschiert ist und mindestens ein anderes dieser Felder spritzblank ist. Über die Fläche des Kunststoff-Formteiles ergibt sich hierbei wenigstens ein direkter Übergang zwischen einem spritzblanken Feld und einem mit einem Abdeckmaterial kaschierten Feld. Der Kunststoff-Träger wird mittels einer Vorrichtung hergestellt, die ein zeitversetztes Herstellen der spritzblanken Felder und der mit Abdeckmaterial kaschierten Felder gestattet, in dem diese Felder durch Rahmenschieber gegeneinander abgedichtet sind. In die entsprechend ausgebildeten Teil-Formhohlräume werden Schmelzen von Kunststoff eingebracht. Zum Ausformen der Schmelze besitzt die Vorrichtung bewegliche Pressstempel, mittels denen ein Pressdruck auf die Schmelze ausübbar ist. Das Verpressen der Schmelze in den Teil-Formhohlräumen die Feldern mit Abdeckmaterial zugeordnet sind, erfolgt zu einem Zeitpunkt, in dem die Schmelze in benachbarten, spritzblanken Feldern zugeordneten Teil-Formhohlräumen noch nicht vollständig erkaltet ist. Hierdurch soll eine gute Verbindung zwischen den Kunststoff-Trägem in mit Abdeckmaterial kaschierten Feldern und spritzblanken Feldern erfolgen. Eine Verbindung zwischen den beiden Kunststoff-Trägern ergibt sich somit quasi an deren im Wesentlichen senkrecht zu einer späteren Oberfläche verlaufenden Stirnkanten. Es hat sich gezeigt, dass eine derartige Verbindung zwischen benachbarten Feldern schon bei geringerer äußerer mechanischer Belastung des fertigen Kunststoff-Formteiles zum Lösen neigt.

Aus EP-A-0 742 942 ist ein Verfahren zum Herstellen eines Kunststoff-Formteiles bekannt, wobei in wenigstens einem Bereich eines Formholraumes eines Formwerkzeuges ein Abdeckmaterial eingebracht wird, der Rand des wenigstens einen Abdeckmaterials so festgelegt wird, dass wenigstens ein Teil-Formhohlraum mit Abdeckmaterial im wenigstens einen Teil-Formhohlraum ohne Abdeckmaterial gegeneinander abgedichtet sind und in den wenigstens einen Teil-Formhohlraum eine Schmelze eines Kunststoffes eingebracht wird, wobei das Ende des Randes des Abdeckmaterials zumindest teilweise von der ersten Schmelze eingeschlossen wird.

Der Erfindung liegt die Aufgabe zugrunde, ein Verfahren und eine Vorrichtung der gattungsgemäßen Art anzugeben, mittels denen in einfacher Weise eine sichere Verbindungsstelle zwischen benachbarten spritzblanken Feldern und mit Abdeckmaterial kaschierten Feldern eines Kunststoff-Trägers eines Kunststoff-Formteils möglich ist.

Erfindungsgemäß wird diese Aufgabe durch ein Verfahren mit den im Anspruch 1 genannten Merkmalen gelöst. Dadurch, dass
(a) in wenigstens einen Bereich eines Formhohlraumes eines Formwerkzeuges ein Abdeckmaterial eingebracht wird;
(b) der Rand des wenigstens einen Abdeckmaterial so festgelegt wird, dass wenigstens ein Teil-Formhohlraum mit Abdeckmaterial und wenigstens ein Teil-Formhohlraum ohne Abdeckmaterial gegeneinander abgedichtet sind;
(c) die Festlegung des Abdeckmaterials dabei so erfolgt, dass der Rand des wenigstens einen Abdeckmaterials den benachbarten Teil-Formhohlraum ohne Abdeckmaterial zumindest berührt, insbesondere in diesen hinein ragt;
(d) in wenigstens einen Teil-Formhohlraum ohne Abdeckmaterial eine Schmelze eines ersten Kunststoffes eingebracht wird, wobei die einragenden Ränder des Abdeckmaterials zumindest teilweise von der Schmelze eingeschlossen werden;
(e) anschließend oder zumindest zeitversetzt in den wenigstens einen Teil-Formhohlraum mit abdeckendem Material eine zweite Schmelze eines Kunststoffen eingebracht wird;
(f) nach Erreichen eines vorgegebenen Füllungsgrades des Teil-Formhohlraumes der Rand des Abdeckmaterials freigegeben wird und hierdurch ein weiterer Teil-Formhohlraum erzeugt wird;
(g) in den weiteren Teil-Formhohlraum die zweite Schmelze des Kunststoffes eingebracht wird;
(h) im Randbereich der zumindest teilweise erstarrten ersten Schmelze des Kunststoffes ein weiterer Teil-Formhohlraum erzeugt wird und
(i) in diesen weiteren Teil-Formhohlraum ebenfalls die zweite Schmelze des Kunststoffes eingebracht wird,
wird vorteilhaft erreicht, dass die Verbindungsstelle zwischen benachbarten spritzblanken Feldern und mit Abdeckmaterial kaschierten Feldern des Kunststoff-Trägers mit besonders großer Festigkeit ausgebildet wird. Der Kunststoff-Träger in dem spritzblanken Feld wird durch das erfindungsgemäße Verfahren in seinem Randbereich durch die zweite Schmelze des Kunststoffes, die in den mit Abdeckmaterial kaschierten Bereichen eingebracht wird, somit nochmals hinterspritzt, so dass sich an der Verbindungsstelle ein Überlappungsbereich der Kunststoff-Träger ergibt. Dieser Überlappungsbereich gewährleistet eine hohe Festigkeit der Verbindungsstelle. Dadurch, dass die zweite Schmelze des Kunststoffes auf die bereits zumindest teilweise erstarrte erste Schmelze des Kunststoffes trifft, wird dieser zumindest in dessen Oberflächenbereich durch die zweite Schmelze nochmals angeschmolzen, so dass sich eine gute stoffschlüssige Verbindung an der Verbindungsstelle ergibt. Diese stoffschlüssige Verbindung kann durch eine spezielle Konturgestaltung der Verbindungsstelle unterstützt werden, indem bevorzugt vorgesehen ist, dass der Kunststoff-Träger in blankgespritzten Feldern im Randbereich Abschnitte aufweist, die von der zweiten Schmelze des Kunststoffes, die in Teil-Formhohlräumen mit Abdeckmaterial eingebracht werden, an mehr als einer Ebene beziehungsweise Stelle umgriffen (umflossen) wird. Diese Abschnitte besonderer Kontur vergrößern die Oberfläche der Verbindungsbereiche und verbessern dadurch die Verbindung an sich. Durch eine spezielle Gestaltung der Teil-Formhohlräume ist es möglich, in die strömende Schmelze zusätzliche Scherwärme zu bringen, was dazu führt, dass das gewollte Aufschmelzen der Verbindungsbereiche bis tief ins Material möglich ist. Hierdurch lässt sich eine besonders gute stoffschlüssige Verbindung zwischen den Teil-Kunststoff-Trägern erzielen.

In bevorzugter Ausgestaltung der Erfindung ist vorgesehen, dass die die Verbindungsstelle zwischen benachbarten Feldern ergebenden Teil-Formhohlräume (Schritte (f) und (h)) gleichzeitig oder zeitlich aufeinander folgend erzeugt werden und dementsprechend gleichzeitig oder zeitlich aufeinander folgend mit der zweiten Schmelze des Kunststoffes beaufschlagt werden. Hierdurch ergibt sich, dass die Fließfront der zweiten Schmelze des Kunststoffes zunächst den Rand des Abdeckmaterials im entsprechenden Feld des Kunststoff-Trägers sicher anfließt und anschließend der Überlappungsbereich zu dem Kunststoff-Träger im spritzblanken Feld erzeugt wird.

In weiterer bevorzugter Ausgestaltung der Erfindung ist vorgesehen, dass zumindest die zweite Schmelze des Kunststoffes in die entsprechenden Teil-Formhohlräume kaskadenförmig eingebracht wird. Hierdurch wird eine besonders gute und homogene Verteilung der zweiten Schmelze erreicht. Insbesondere kann hier in einfacher Weise eine Fließfront der zweiten Schmelze bis zum Erreichen des Überlappungsbereiches mit den Kunststoff-Träger in den spritzblanken Feldern aufrecht erhalten werden, so dass die zweite Schmelze die zum zumindest oberflächennahen Aufschmelzen des Kunststoff-Trägers im spritzblanken Feld benötigte Wärmeenergie beinhaltet.

Erfindungsgemäß wird die Aufgabe ferner durch eine Vorrichtung mit den im Anspruch 6 genannten Merkmalen gelöst. Dadurch, dass
(a) eine erste und eine gegenüber liegende zweite Matrize, welche einen die Form des Kunststoff-Formteiles zumindest teilweise nachbildenden Formhohlraum ausbilden;
(b) Mittel, welche der zumindest teilweisen Anlage mindestens eines Abdeckmaterials an einer Wandung der ersten Matrize dienen;
(c) wenigstens ein durch die zweite Matrize in den Formhohlraum durchfahrbaren Rahmenschieber, mittels dem der Rand des wenigstens einen Abdeckmaterials abdichtbar ist;
(d) wenigstens eine Einrichtung zum Einbringen einer ersten Schmelze eines Kunststoffes in wenigstens einen ersten Teil-Formhohlraum;
(e) wenigstens eine Einrichtung zum Einbringen einer zweiten Schmelze eines Kunststoffes in wenigstens einen zweiten, von dem wenigstens einen Rahmenschieber umschlossenen Teil-Formhohlraum und
(f) Mittel, mittels denen der wenigstens eine Rahmenschieber zu einem definierten Zeitpunkt um einen definierten Hub aus dem Formhohlraum ausfahrbar ist,
vorgesehen sind, lässt sich in einfacher Weise eine Vorrichtung bereit stellen, mittels der Kunststoff-Formteile erzielbar sind, die wenigstens zwei Felder umfassen, von denen wenigstens ein Feld spritzblank ist und wenigstens ein Feld mit einem Abdeckmaterial kaschiert ist und eine Verbindungsstelle zwischen den Feldern mit einem Überlappungsbereich ausgebildet ist. Die Vorrichtung zeichnet sich durch einen relativ einfachen, nur wenig bewegbar angeordnete Teile aufweisenden Aufbau aus. An beweglichen Teilen ist lediglich der wenigstens eine Rahmenschieber vorzusehen, der beim Einfahren in den Formhohlraum gleichzeitig eine Abdichtfunktion übernimmt und beim definierten Ausfahren aus den Formhohlraum einen Teil-Formhohlraum freigibt, der von einer Schmelze auffüllbar ist. Durch Ausbildung der Kontur des Rahmenschiebers lässt sich somit die Ausbildung der Verbindungsstelle zwischen benachbarten Feldern definieren. Eine Bewegung der Matrizen oder von in die Matrizen integrierten Pressstempeln oder dergleichen ist zum Erzielen eines Kunststoff-Formteiles nicht erforderlich. Lediglich relativ klein bauende Rahmenschieber sind beweglich zu lagern und in ihrer Bewegung definiert anzusteuern. Dies kann durch hydraulische, pneumatische, elektrische oder mechanische Übertragungsglieder erfolgen.

Bei zumindest teilweise gekrümmten Konturvertäufen im Verbindungsbereich kann vorgesehen sein, dass der wenigstens eine Rahmenschieber mehrere nebeneinander (in Längserstreckung des Verbindungsbereiches) angeordnete Teilabschnitte umfasst.

In bevorzugter Ausgestaltung der Erfindung ist vorgesehen, dass der wenigstens eine Rahmenschieber wenigstens zwei Teile umfasst, die zu unterschiedlichen definierten Zeitpunkten aus dem Formhohlraum ausfahrbar sind.

Hier wird vorteilhaft erreicht, dass der durch den Rahmenschieber definierte Verbindungsbereich mit großer Präzision und einem homogen ausgebildeten Überlappungsbereich erhalten werden kann. Insbesondere, wenn ferner bevorzugt vorgesehen ist, dass die wenigstens zwei Teile des wenigstens einen Rahmenschiebers mit unterschiedlichem definierten Hub ausfahrbar sind, lässt sich die Kontur der Verbindungsstelle zwischen den benachbarten Feldern auf die Erfordernisse exakt abstimmen. Durch den unterschiedlichen Hub können so beispielsweise die Bereiche bis zum Erreichen des Kunststoff-Trägers des spritzblänken Feldes und der unmittelbare anschließende Überlappungsbereich über den Kunststoff-Träger des spritzblanken Feldes exakt eingestellt werden. Insbesondere kann hier die Menge der zweiten Schmelze, die zum zumindest oberflächennahen Aufschmelzen des Kunststoff-Trägers in den spritzblanken Feldern notwendig ist, genau dosiert und durch die vorgegebene Kontur exakt platziert werden. Hierdurch wird möglich, die zu erzielende stoffschlüssige Verbindung mit hoher Festigkeit auszubilden.

Die Aufgabe wird ferner durch ein Kunststoff-Formteil mit den in Anspruch 16 genannten Merkmalen gelöst. Dadurch, dass der Kunststoff-Träger des spritzblanken Feldes ein Ende eines Randes des Abdeckmaterials eines benachbarten Feldes umgreift und der Kunststoff-Träger des mit Abdeckmaterial kaschierten Feldes den Kunststoff-Träger des benachbarten spritzblanken Feldes zumindest bereichsweise überdeckt, wird vorteilhaft möglich, die Verbindungsstelle zwischen den Feldern mit einer hohen Festigkeit auszubilden. Insbesondere bei einer späteren mechanischen Belastung des fertigen Kunststoff-Formteiles wird ein Lösen, Brechen oder dergleichen der Verbindungsstelle zwischen den zwei unterschiedlich gespritzten Feldern vermieden. Gerade im Bereich der Verbindungsstellen kommt es zu einer Überlappung der Kunststoff-Träger, so dass diese eine hohe Festigkeit beziehungsweise Stabilität aufweisen.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: einen schematischen Teilschnitt durch eine Vorrichtung zur Herstellung von Kunststoff-Formteilen in einem ersten Arbeitsschritt;
- Figur 1a: eine Detailvergrößerung im Bereich einer späteren Verbindungsstelle zwischen benachbarten Feldern des späteren Kunststoff-Formteiles;
- Figur 2: einen schematischen Teilschnitt durch die Vorrichtung zu einem späteren Arbeitsschritt und
- Figur 2a: eine Detailvergrößerung der Verbindungsstelle zwischen benachbarten Feldern des späteren Kunststoff-Formteiles.

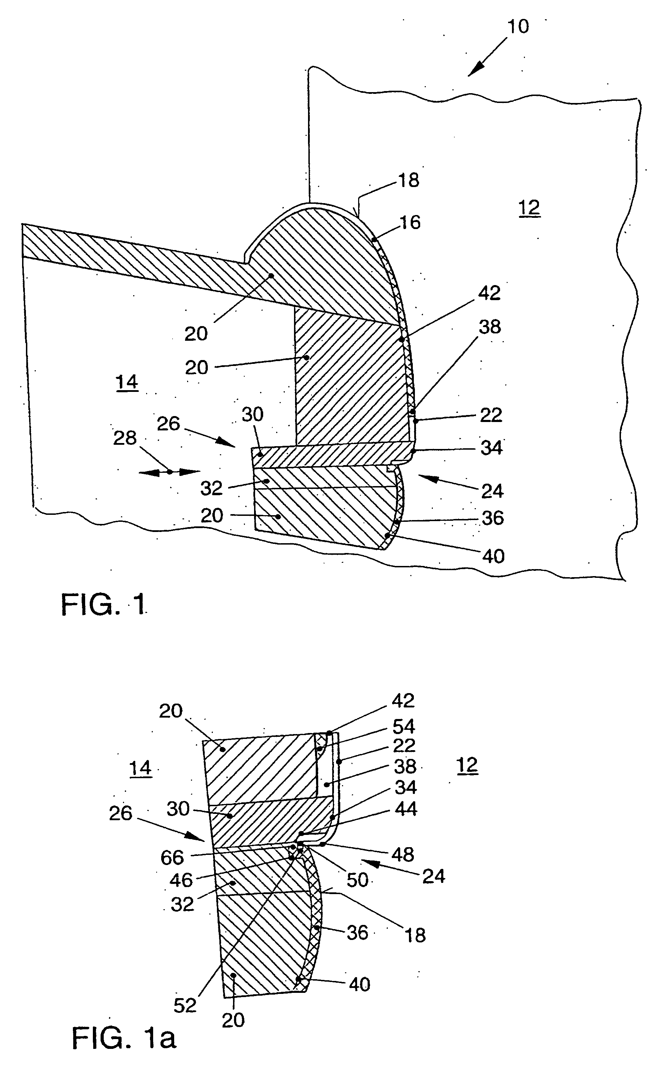

Figur 1 zeigt eine insgesamt mit 10 bezeichnete Vorrichtung zum Herstellen von Kunststoff-Formteilen. Die Vorrichtung 10 ist in einer schematischen Schnittdarstellung ausschnittsweise dargestellt, sofern dies für die Erläuterung der Erfindung wesentlich ist. Die Vorrichtung 10 umfasst eine erste Matrize 12 und eine gegenüber liegende zweite Matrize 14, die einen Formhohlraum 16 ausbilden. Dieser Formhohlraum 16 bildet die Form eines mittels der Vorrichtung 10 herzustellenden Kunststoff-Formteiles zumindest teilweise nach. Zur Ausbildung des Formhohlraumes 16 besitzt die Matrize 12 eine entsprechend ausgearbeitete Kontur 18, in die Einzelteile 20 der Matrize 14 entsprechend eingreifen. Zwischen der Kontur 18 und den Einzelteilen 20 ist der Formhohlraum 16 ausgebildet. Abschnittsweise ist an die Kontur 18 der ersten Matrize 12 ein Abdeckmaterial 22 in Anlage gebracht. Das Abdeckmaterial 22 kann beispielsweise eine Textilbahn, eine Lederbahn, eine Kunststofffolie oder dergleichen sein. Durch dieses bereichsweise Anordnen des Abdeckmaterials 22 ergeben sich beim späteren Kunststoff-Formteil Felder, die mit Abdeckmaterial kaschiert sind, und Felder, die spritzblank sind. Diese gehen an einer hier mit 24 bezeichneten Verbindungsstelle ineinander über. Ein Kunststoff-Formteil kann hierbei mehrere spritzblanke Felder und mehrere mit Abdeckmaterial 22, gegebenenfalls unterschiedlichen Abdeckmaterialien 22, kaschierte Felder umfassen. Ein mögliches Anwendungsbeispiel für derartige Kunststoff-Formteile ist beispielsweise die Innenverkleidung einer Kraftfahrzeugtür.

In die zweite Matrize 14 ist wenigstens ein Rahmenschieber 26 integriert, der im Bereich der Verbindungsstellen 24 verläuft. Der Rahmenschieber 26 ist entsprechend eines dargestellten Doppelpfeiles 28 in den Formhohlraum 16 hinein beziehungsweise aus diesem hinaus bewegbar gelagert. Hierzu können im Einzelnen nicht dargestellte hydraulisch, pneumatisch, elektrisch oder mechanisch angetriebene Stellmittel vorgesehen sein. Der Rahmenschieber 26 ist zweiteilig ausgebildet, das heißt, er umfasst ein erstes Rahmenschieberteil 30 und ein zweites Rahmenschieberteil 32. Die Rahmenschieberteile 30 und 32 sind unabhängig voneinander in beziehungsweise aus dem Formhohlraum 16 verlagerbar.

Das Rahmenschieberteil 30 ist gegen die Kontur 16 der ersten Matrize 12 vertagerbar und dichtet hierbei auf einem Rand 34 des Abdeckmaterials 22 ab. Hierdurch kommt es zur Ausbildung eines ersten Teil-Formhohlraumes 36 und eines zweiten Teil-Formhohlraumes 38. Je nach Anzahl der eingesetzten Abdeckmaterialien 22 können auch mehrere Teil-Formhohlräume 36 beziehungsweise 38 entstehen. Das Rahmenschieberteil 32 ist soweit in Richtung des Formhohlraumes 16 verfahren, dass dieses zur Ausbildung des Teil-Formhohlraumes 36 mit beiträgt. Das heißt, der Teil-Formhohlraum 36 erstreckt sich über wenigstens einen Teil 20 der Matrize 14 und den Rahmenschieberteil 32. Der Rand 34 des Abdeckmaterials 22 kragt über den Rahmenschieberteil 30 hinaus und ragt somit in den Teil-Formhohlraum 36 ein.

In die Vorrichtung 10 sind im Einzelnen nicht dargestellte Düsen integriert, mittels denen eine erste Schmelze 40 eines Kunststoffes in den beziehungsweise die Teil-Formhohlräume 36 einbringbar ist und eine zweite Schmelze 42 in den beziehungsweise die Teil-Formhohlräume 38 einbringbar ist. Hierbei können Schmelzen unterschiedlicher Zusammensetzung, unterschiedlicher Viskosität und unter unterschiedlichen Drücken eingesetzt werden.

In Figur 1a ist eine vergrößerte Darstellung der Verbindungsstelle 24 zwischen einem spritzblanken Feld und einem mit Abdeckmaterial 22 kaschierten Feld des späteren Kunststoff-Trägers des herzustellenden Kunststoff-Formteiles in einer vergrößerten Darstellung gezeigt. Gleiche Teile wie in Figur 1 sind mit gleichen Bezugszeichen versehen und nicht nochmals erläutert.

Anhand der Darstellung in Figur 1a wird deutlich, dass die Rahmenschieberteile 30 und 32 in Richtung der Teil-Formhohlräume 36 beziehungsweise 38 weisende Stufen 44 beziehungsweise 46 besitzen. Die Stufe 44 des Rahmenschieberteiles 30 führt zur Ausbildung eines Freiraumes im Bereich einer Krümmung 48 des Abdeckmaterials 22. Diese Gestaltung ist nur geeignet, wenn das Abdeckmaterial 22 nicht durch den Druck der Schmelze 40 in den von der Stufe 44 gebildeten Freiraum gedrückt wird. Gegebenenfalls erfolgt eine Anpassung der Kontur des Rahmenschieberteiles 30 an die Krümmung 48 oder es ist der Einsatz eines weiteren Rahmenschieberteiles erforderlich. Das Abdeckmaterial 22 ragt mit seinem Ende 50 über die Kontur 18 der ersten Matrize 12 hinaus. Das Ende 50 kragt somit in den Teil-Formhohlraum 36 hinein, der stirnseitig von dem Rahmenschieberteil 30 begrenzt ist. Die Stufe 46 des Rahmenschieberteiles 32 führt dazu, dass das Ende 50 des Abdeckmaterials 22 frei in den Teil-Formhohlraum 36 einkragen kann. Gegebenenfalls bildet das Ende 50 des Abdeckmaterials 22 einen Umbug 52 aus, der in den von der Stufe 46 ausgebildeten Freiraum einkragt.

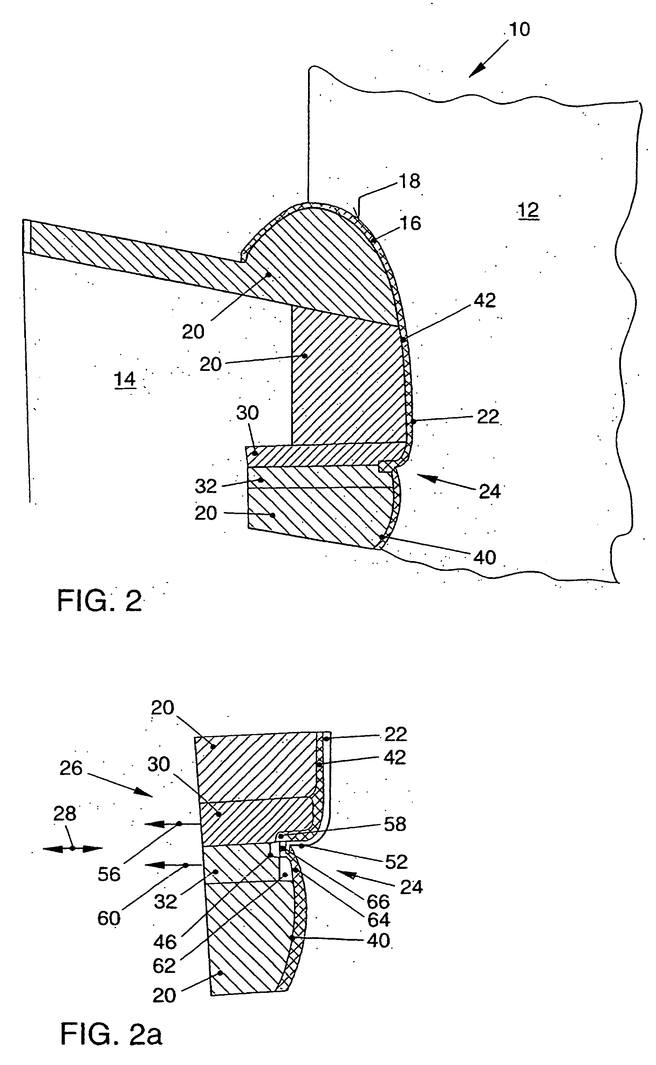

Die Funktion der Vorrichtung 10 und der Ablauf des erfindungsgemäßen Verfahrens zur Herstellung eines Kunststoff-Formteiles wird in Zusammenhang mit den Figuren 2 und 2a nachfolgend erläutert:

In den Figuren 1 und 1a ist die Ausgangsposition der Vorrichtung 10 gezeigt, wobei in den Teil-Formhohlraum 36 bereits die erste Schmelze 40 eines Kunststoffes eingebracht ist. Diese Schmelze umschließt den Umbug 52 des Endes 50 des Abdeckmaterials 22.

In den Teil-Formhohlraum 38 wurde begonnen, die zweite Schmelze 42 eines Grundstoffes einzubringen, wobei eine Fließfront 54 sich unter anderem in Richtung des Rahmenschiebers 26 bewegt.

Wenn die Fließfront 54 den Rahmenschieberteil 30 erreicht oder kurz bevor die Fließfront 54 den Rahmenschieberteil 30 erreicht, wird dieser entsprechend einer Hubbewegung 56 (Figur 2a) aus dem Formhohlraum 16 hinaus bewegt, so dass ein weiterer Teil-Formhohlraum 58 entsteht. Dieser weitere Teil-Formhohlraum 58 wird nunmehr mit der zweiten Schmelze 42 des Kunststoffes gefüllt. Anschließend wird entsprechend einer Hubbewegung 60 das Rahmenschieberteil 32 aus dem Formhohlraum 16 bewegt, so dass ein weiterer Teil-Formhohlraum 62 entsteht. Dieser Teil-Formhohlraum 62 wird teilweise hinter der bereits im Wesentlichen erstarrten ersten Schmelze 40 ausgebildet. Der Teil-Formhohlraum 62 wird nunmehr ebenfalls von der zweiten Schmelze 42 des Kunststoffes gefüllt, so dass sich ein Übertappungsbereich 64 der ersten - bereits teilweise erstarrten - Schmelze 40 und der zweiten Schmelze 42 ergibt. Innerhalb dieses Überlappungsbereiches 64 umschließt die zweite Schmelze 42 den durch die Stufe 46 ausgebildeten Vorsprung 66 der bereits teilweise erstarrten Schmelze 40 (Figur 1a). Dieser Vorsprung 66 umschließt den Wulst 52 des Abdeckmaterials 22. Durch die sich noch im geschmolzenen Zustand befindende zweite Schmelze 42 wird im Überlappungsbereich 64 die Oberfläche der bereits zum Teil erstarrten Schmelze 40 und insbesondere der Vorsprung 66 angeschmolzen, so dass sich eine stoffschlüssige Verbindung nach Erkalten sowohl der Schmelze 40 als auch der Schmelze 42 im Bereich der Verbindungsstelle 24 ergibt.

Durch die Konturausbildung (Vorsprung 66) vergrößert sich die Oberfläche der Verbindungsbereiche und es verbessert sich dadurch die Verbindung an sich. Durch eine spezielle Gestaltung der Teil-Formhohlräume ist es möglich, in die strömende Schmelze zusätzliche Scherwärme zu bringen, was dazu führt, dass das gewollte Aufschmelzen der Verbindungsbereiche bis tief ins Material möglich ist.

Nach Erstarren sowohl der ersten Schmelze als auch der zweiten Schmelze 42 kann die Vorrichtung 10 durch Lösen der Matrize 12 und/oder der Matrize 14 geöffnet werden, so dass das dann fertige Kunststoff-Formteil entnommen werden kann. Das Kunststoff-Formteil besitzt die Form des ursprünglichen Formhohlraumes 16, wobei beliebige Konturen 18 - entsprechend der Formgebung der Matrizen 12 und 14 - in allen drei Raumrichtungen erzielbar sind. Die Verbindungsstelle 24 des dann fertigen Kunststoff-Formteiles zeichnet sich durch den Überlappungsbereich 64 aus, der zu einer besonders stabilen Anbindung der Kunststoff-Träger in den spritzblanken Feldern und den mit Abdeckmaterial 22 kaschierten Feldern führt.

Nach weiteren, nicht dargestellten Ausführungsbeispielen kann vorgesehen sein, dass die in Richtung des Formhohlraumes 16 weisende Kontur der Rahmenschieberteile 30 und/oder 32 mehr als eine Stufe 44 beziehungsweise 46 ausbilden. Hierdurch kann beispielsweise eine Art treppenförmiger Übergang im Überlappungsbereich 64 zwischen den Kunststoff-Trägerteilen im spritzblanken Feld und mit Abdeckmaterial 22 kaschiertem Feld geschaffen werden. Diese gegebenenfalls mehrstufige Ausführung der Kontur kann auch nebeneinander liegende - gemäß der Darstellung in den Figuren 1 und 2 also in beziehungsweise aus der Papierebene hinaus - Abstufungen aufweisen, so dass sich eine Art Zinnenstruktur, Sägezahnstruktur oder dergleichen ergibt. Hierdurch wird eine besonders gute stoffschlüssige Verbindung der Kunststoff-Träger zwischen den spritzblanken Feldern und den mit Abdeckmaterial 22 kaschierten Feldern erhalten, der sich darüber hinaus durch eine gute Elastizität auszeichnet. Insofern sind mechanische Belastungen des fertigen Kunststoff-Formteiles absorbierbar, ohne dass es zu einem Reißen oder dergleichen der Verbindungsstellen 24 kommt.

## Patentansprüche

1. Verfahren zum Herstellen eines Kunststoff-Formteiles, wobei
(a) in wenigstens einem Bereich eines Formhohlraumes (16) eines Formwerkzeuges (10) ein Abdeckmaterial (22) eingebracht wird;
(b) der Rand (34) des wenigstens einen Abdeckmaterials (22) so festgelegt wird, dass wenigstens ein Teil-Formhohlraum (38) mit Abdeckmaterial (22) und wenigstens ein Teil-Formhohlraum (36) ohne Abdeckmaterial gegeneinander abgedichtet sind;
(c) in den wenigstens einen Teil-Formhohlraum (36) eine erste Schmelze (40) eines Kunststoffes eingebracht wird, wobei das Ende (50, 52) des Randes (34) des Abdeckmaterials (22) zumindest teilweise von der ersten Schmelze (40) eingeschlossen wird; **dadurch gekennzeichnet, dass**
(d) die Festlegung des Abdeckmaterials (22) dabei so erfolgt, dass ein Ende (50, 52) des Randes (34) des wenigstens einen Abdeckmaterials (22) den benachbarten Teil-Formhohlraum (36) zumindest berührt, insbesondere in diesen hinein ragt;
(e) anschließend oder zumindest zeitversetzt zu Schritt (c) in den wenigstens einen Teil-Formhohlraum (38) eine zweite Schmelze eines Kunststoffes eingebracht wird;
(f) nach Erreichen eines vorgegebenen Füllungsgrades des Teil-Formhohlraumes (38) der Rand (34) des Abdeckmaterials (22) freigegeben wird und hierdurch ein weiterer Teil-Formhohlraum (58) erzeugt wird;
(g) in den weiteren Teil-Formhohlraum (58) die zweite Schmelze (42) des Kunststoffes eingebracht wird;
(h) in einem Überlappungsbereich (64) der zumindest teilweise erstarrten ersten Schmelze (40) ein weiterer Teil-Formhohlraum (62) erzeugt wird und
(i) in diesen weiteren Teil-Formhohlraum (62) ebenfalls die zweite Schmelze (42) eingebracht wird.

2. Verfahren nach Anspruch 1, **dadurch gekennzeichnet, dass** die Teil-Formhohlräume (58, 62) zeitlich aufeinander folgend erzeugt werden.

3. Verfahren nach Anspruch 1, **dadurch gekennzeichnet, dass** die Teil-Formhohlräume (58, 62) gleichzeitig erzeugt werden.

4. Verfahren nach einem der vorhergehenden Ansprüche, **dadurch gekennzeichnet, dass** die zweite Schmelze (42) kaskadenförmig aufeinander folgend in die Teil-Formhohlräume (38, 58, 62) eingebracht wird.

5. Verfahren nach einem der vorhergehenden Ansprüche, **dadurch gekennzeichnet, dass** gleichzeitig in mehrere Teil-Formhohlräume (36) die erste Schmelze (40) eingebracht wird und anschließend oder zumindest zeitversetzt gleichzeitig in mehrere Teil-Formhohlräume (38, 58, 62) die zweite Schmelze (42) eingebracht wird.

6. Vorrichtung zur Durchführung des Verfahrens nach einem der Ansprüche 1 bis 5, wobei
(a) eine erste Matrize (12) und eine gegenüber liegende zweite Matrize (14), welche einen die Form des Kunststoff-Formteils zumindest teilweise nachbildenden Formhohlraum (16) ausbilden;
(b) Mittel, welche der zumindest teilweisen Anlage mindestens eines Abdeckmaterials (22) an einer Kontur (18) der ersten Matrize (12) dienen;
(c) wenigstens einen durch die zweite Matrize (14) in den Formhohlraum (60) hindurch fahrbaren Rahmenschieber, mittels dem der Rand (34) des Abdeckmaterials (22) abdichtbar ist und erste und zweite Teil-Formhohlräume (36, 38) erzeugbar sind;
(d) wenigstens eine Einrichtung, insbesondere Düse, Stange oder dergleichen, zum Einbringen einer ersten Schmelze (40) eines Kunststoffes in wenigstens einen der ersten Teil-Formhohlräume (36);
(e) wenigstens eine Einrichtung, insbesondere Düse, Stange oder dergleichen, zum Einbringen einer zweiten Schmelze (42) eines Kunststoffes in wenigstens einen zweiten, von dem wenigstens einen Rahmenschieber (26) umschlossenen Teil-Formhohlraum (38) und
(f) Mittel, mittels denen der wenigstens eine Rahmenschieber (26) zu einem definierten Zeitpunkt um einen definierten Hub (56, 60) aus dem Formhohlraum (16) ausfahrbar ist.

7. Vorrichtung nach Anspruch 6, **dadurch gekennzeichnet, dass** der wenigstens eine Rahmenschieber (26) wenigstens zwei Teile (30, 32) umfasst, die zu unterschiedlich definierten Zeitpunkten aus dem Formhohlraum (16) ausfahrbar sind.

8. Vorrichtung nach einem der vorhergehenden Ansprüche, **dadurch gekennzeichnet, dass** die wenigstens zwei Teile (30, 32) des Rahmenschiebers (26) mit unterschiedlichen definierten Hüben (56, 60) aus dem Formhohlraum (16) ausfahrbar sind.

9. Vorrichtung nach einem der vorhergehenden Ansprüche, **dadurch gekennzeichnet, dass** mittels dem wenigstens einen Rahmenschieber (26) eine Verbindungsstelle (24) zwischen dem ersten Teil-Formhohlraum (36) und dem zweiten Teil-Formhohlraum (38) freigebbar ist.

10. Vorrichtung nach einem der vorhergehenden Ansprüche, **dadurch gekennzeichnet, dass** der Rahmenschieber (26) in Richtung der ersten Matrize (12) weisende Konturabschnitte aufweist, die einer Ausgestaltung der Verbindungsstelle (24) dienen.

11. Vorrichtung nach Anspruch 10, **dadurch gekennzeichnet, dass** der Rahmenschieber (26) wenigstens eine Stufe (44, 46) aufweist.

12. Vorrichtung nach einem der vorhergehenden Ansprüche, **dadurch gekennzeichnet, dass** der Rahmenschieber (26) zwei Teile (30, 32) aufweist, wobei jedes der Teile (30, 32) eine Stufe (44) beziehungsweise (46) aufweist, die zueinander zugewandt sind.

13. Vorrichtung nach Anspruch 12, **dadurch gekennzeichnet, dass** die Stufen (44, 46) unterschiedliche Stufenhöhen aufweisen.

14. Vorrichtung nach einem der vorhergehenden Ansprüche, **dadurch gekennzeichnet, dass** zumindest jedem der zweiten Teil-Formhohlräume (38) wenigstens zwei Einrichtungen, insbesondere Düsen, Stangen oder dergleichen, zugeordnet sind, die nacheinander mit der zweiten Schmelze (42) beaufschlagbar sind.

15. Vorrichtung nach Anspruch 14, **dadurch gekennzeichnet, dass** die wenigstens zwei Einrichtungen in Richtung der Verbindungsstelle (24) aufeinander folgend mit der zweiten Schmelze (42) beaufschlagbar sind.

16. Kunststoff-Formteil mit einem Kunststoff-Träger (40, 42), der wenigstens zwei Felder umfasst, von denen mindestens ein Feld mit einem Abdeckmaterial (22) kaschiert ist und mindestens ein zu diesem benachbartes Feld spritzblank ist, **dadurch gekennzeichnet, dass** der Kunststoff-Träger (40 ) des spritzblanken Feldes ein Ende (50, 52) eines Randes (34) des Abdeckmaterials (22) eines benachbarten Feldes umgreift und der Kunststoff-Träger (42) des mit Abdeckmaterial (22) kaschierten Feldes den Kunststoff-Träger (40) des benachbarten spritzblanken Feldes zumindest bereichsweise überdeckt.

17. Kunststoff-Formteil nach Anspruch 16, **dadurch gekennzeichnet, dass** das Kunststoff-Formteil mehrere, mit gegebenenfalls unterschiedlichen Abdeckmaterialien (22) kaschierte Felder umfasst, zwischen denen jeweils ein spritzblankes Feld angeordnet ist.

18. Kunststoff-Formteil nach einem der vorhergehenden Ansprüche, **dadurch gekennzeichnet, dass** die Kunststoff-Träger (40, 42) in kaschierten Feldern und/oder spritzblanken Feldern aus unterschiedlichen Kunststoffen bestehen.

19. Kunststoff-Formteil nach einem der vorhergehenden Ansprüche, **dadurch gekennzeichnet, dass** der Kunststoff-Träger (42) des kaschierten Feldes den Kunststoff-Träger (40) des spritzblanken Feldes an dessen Rand überlappt.

20. Kunststoff-Formteil nach Anspruch 19, **dadurch gekennzeichnet, dass** der Kunststoff-Träger (42) des kaschierten Feldes den Rand des Kunststoff-Trägers (40) des spritzblanken Feldes stufenförmig überlappt.

21. Kunststoff-Formteil nach Anspruch 20, **dadurch gekennzeichnet, dass** wenigstens eine Stufe in Richtung des Kunststoff-Trägers (40) abfällt.

22. Kunststoff-Formteil nach einem der Ansprüche 20 oder 21, **dadurch gekennzeichnet, dass** die Stufen entlang einer Verbindungsstelle (24) zwischen den Kunststoff-Trägern (40) und (42) verlaufen.

## Claims

1. Method for manufacturing a formed synthetic material part, wherein
(a) a covering material (22) is introduced into at least one region of a mould cavity (16) of a form tool (10);
(b) the edge (34) of the at least one covering material (22) is attached in such a manner that at least one mould cavity section (38) with covering material (22) and at least one mould cavity section (36) without covering material are sealed off from one another;
(c) a first molten mass (40) of a synthetic material is introduced into at least one mould cavity section (36), wherein the end (50, 52) of the edge (34) of the covering material (22) is at least partially covered by the first molten mass (40); **characterised in that**
(d) the covering material (22) in this context, is attached in such a manner that one end (50, 52) of the edge (34) of the at least one covering material (22) at least touches the adjacent mould cavity section (36), and in particular projects into the latter;
(e) subsequently, or at least with a time offset relative to step (c), a second molten mass of a synthetic material is introduced into the at least one mould cavity section (38);
(f) after a predetermined filled level of the mould cavity section (38) has been reached, the edge (34) of the covering material (22) is exposed and as a result, a further mould cavity section (58) is created;
(g) the second molten mass (42) of the synthetic material is introduced into the further mould cavity section (58);
(h) a further mould cavity section (62) is created in an overlapping region (64) of the at least partially solidified first molten mass (40) and
(i) the second molten mass (42) is also introduced into this further mould cavity section (62).

2. Method according to claim 1, **characterised in that** the mould cavity sections (58, 62) are created in chronological succession relative to one another.

3. Method according to claim 1, **characterised in that** the mould cavity sections (58, 62) are created simultaneously.

4. Method according to any one of the preceding claims, **characterised in that** the second molten mass (42) is introduced into the mould cavity sections (38, 58, 62) in the form of successive cascades.

5. Method according to any one of the preceding claims, **characterised in that** the first molten mass (40) is introduced into several mould cavity sections (36) simultaneously and following this, or at least with a time offset, the second molten mass (42) is introduced simultaneously into several mould cavity sections (38, 58, 62).

6. Device for the implementation of the method according to claims 1 to 5, with
(a) a first mould (12) and a second mould (14) disposed opposite to the latter, which provide a mould cavity (16) at least partially reproducing the shape of the synthetic material formed part;
(b) means, which are used for the at least partial positioning of a covering material (22) on one contour (18) of the first mould (12);
(c) at least one frame slide capable of being moved through the second mould (14) into the mould cavity (60), by means of which the edge (34) of the covering material (22) can be sealed off, thereby creating a first and second mould-cavity section (36, 38);
(d) at least one device, in particular nozzle, rod or similar, for introducing a first molten mass (40) of a synthetic material into at least one of the first mould cavity sections (36);
(e) at least one device, in particular, a nozzle, rod or similar, for introducing a second molten mass (42) of a synthetic material into at least one second mould cavity section (38) enclosed by the at least one frame slide (26) and
(f) means, by means of which the at least one frame slide (26) can be withdrawn from the mould cavity (16) at a defined time with a defined stroke (56, 60).

7. Device according to claim 6, **characterised in that** the at least one frame slide (26) provides at least two parts (30, 32), which can be withdrawn from the mould cavity (16) at differently defined points in time.

8. Device according to any one of the preceding claims, **characterised in that** the at least two parts (30, 32) of the frame slide (26) can be withdrawn from the mould cavity (16) with differently defined strokes (56, 60).

9. Device according to any one of the preceding claims, **characterised in that** a connecting point (24) between the first mould cavity section (36) and the second mould cavity section (38) can be exposed by means of the at least one frame slide (26).

10. Device according to any one of the preceding claims, **characterised in that** the frame slide (26) provides contour portions facing towards the first mould (12), which are used to form the connecting point (24).

11. Device according to claim 10, **characterised in that** the frame slide (26) provides at least one step (44, 46).

12. Device according to any one of the preceding claims, **characterised in that** the frame slide (26) provides two parts (30, 32) wherein each of the parts (30, 32) provides one step (44) and/or (46) respectively, which face towards one another.

13. Device according to claim 12, **characterised in that** the steps (44, 46) provide different step heights.

14. Device according to any one of the preceding claims, **characterised in that** at least two devices, especially nozzles, rods or similar, which can be charged successively with the second molten mass (42), are allocated to each of the second mould cavity sections (38).

15. Device according to claim 14, **characterised in that** the at least two devices can be charged with the second molten mass (42) one after the other in the direction of the connecting point (24).

16. Synthetic material part with a synthetic material carrier (40, 42), which provides at least two fields, of which at least one field is covered with a covering material (22) and at least one field adjacent to the latter is non-coated, **characterised in that** the synthetic material carrier (40) of the non-coated field engages with one end (50, 52) of one edge (34) of the covering material (22) of an adjacent field, and the synthetic material carrier (42) of the field covered with the covering material (22) covers the synthetic material carrier (40) of the adjacent non-coated field at least in regions.

17. Synthetic material formed part according to claim 16, **characterised in that** the synthetic material formed part provides several fields covered with optionally different covering materials (22), between which in each case, a non-coated field is disposed.

18. Synthetic material part according to any one of the preceding claims, **characterised in that** the synthetic material carriers (40, 42) in covered fields and/or non-coated fields consist of different synthetic materials.

19. Synthetic material formed part according to any one of the preceding claims, **characterised in that** the synthetic material carrier (42) of the covered field overlaps the synthetic material carrier (40) of the non-coated field at its edge.

20. Synthetic material formed part according to claim 19, **characterised in that** the synthetic material carrier (42) of the covered field overlaps the edge of the synthetic material carrier (40) of the non-coated field in the form of steps.

21. Synthetic material formed part according to claim 20, **characterised in that** at least one step is inclined towards the synthetic material carrier (40).

22. Synthetic material formed part according to any one of claims 20 or 21, **characterised in that** the steps run along a connecting point (24) between the synthetic material carriers (40) and (42).

## Revendications

1. Procédé de fabrication d'une pièce moulée en matière plastique, dans lequel :
(a) un matériau de recouvrement (22) est introduit dans au moins une zone d'une cavité de formage (16) d'un outil de formage (10) ;
(b) le bord (34) du, au moins un, matériau de recouvrement (22) est fixé de sorte qu'au moins une partie de cavité de formage (38) avec matériau de recouvrement (22) et au moins une partie de cavité de formage (36) sans matériau de recouvrement soient étanches l'une par rapport à l'autre ;
(c) une première fonte (40) d'une matière plastique est introduite dans la, au moins une, partie de cavité de formage (36), l'extrémité (50, 52) du bord (34) du matériau de recouvrement (22) étant englobée au moins partiellement par la première fonte (40) ; **caractérisé en ce que** :
(d) la fixation du matériau de recouvrement (22) a lieu de sorte qu'une extrémité (50, 52) du bord (34) d'au moins un matériau de recouvrement (22) soit au moins en contact avec la partie de cavité de formage voisine (36) ou notamment qu'elle pénètre dans celle-ci ;
(e) une deuxième fonte d'une matière plastique est introduite dans au moins une partie de cavité de formage (38) immédiatement après l'étape (c) ou au moins avec un décalage temporel par rapport à cette dernière ;
(f) le bord (34) du matériau de recouvrement (22) est dégagé après obtention d'un niveau de remplissage de la partie de cavité de formage (38) fixé à l'avance, ce qui a pour effet de créer une partie de cavité de formage supplémentaire (58) ;
(g) la deuxième fonte (42) de matière plastique est introduite dans la partie de cavité de formage supplémentaire (58) ;
(h) une partie de cavité de formage supplémentaire (62) est créée dans une zone de chevauchement (64) de la première fonte (40) au moins partiellement solidifiée et
(i) la deuxième fonte (42) est également introduite dans cette partie de cavité de formage supplémentaire (62).

2. Procédé selon la revendication 1, **caractérisé en ce que** les parties de cavité de formage (58, 62) sont créées chronologiquement l'une après l'autre.

3. Procédé selon la revendication 1, **caractérisé en ce que** les parties de cavité de formage (58, 62) sont créées en même temps.

4. Procédé selon l'une des revendications précédentes, **caractérisé en ce que** la deuxième fonte (42) est introduite en cascade l'une après l'autre dans les parties de cavité de formage (38, 58, 62).

5. Procédé selon l'une des revendications précédentes, **caractérisé en ce que** la première fonte (40) est introduite dans plusieurs parties de cavité de formage (36) en même temps et **en ce que** la deuxième fonte (42) est introduite immédiatement après, ou au moins avec un décalage temporel, dans plusieurs parties de cavité de formage (38, 58, 62) en même temps.

6. Dispositif de mise en oeuvre du procédé selon l'une des revendications 1 à 5, dans lequel :
(a) une première matrice (12) et une seconde matrice (14) située en face de la première forment une cavité de formage (16) reproduisant au moins partiellement la forme de la pièce moulée en matière plastique ;
(b) des moyens servent à appliquer au moins partiellement un matériau de recouvrement (22) sur au moins un contour (18) de la première matrice (12) ;
(c) au moins un coulisseau de cadre au moyen duquel il est possible de rendre étanche le bord (34) du matériau de recouvrement (22) et de créer les première et deuxième parties de cavité de formage (36, 38), peut être déplacé à travers la cavité de formage (60) par la deuxième matrice (14) ;
(d) un dispositif au moins, notamment une buse, une tige ou analogue, sert à introduire une première fonte (40) de matière plastique dans au moins l'une des premières parties de cavité de formage (36) ;
(e) un dispositif au moins, notamment une buse, une tige ou analogue, sert à introduire une deuxième fonte (42) de matière plastique dans au moins une deuxième partie de cavité de formage (38) entourée par le, au moins un, coulisseau de cadre (26) et
(f) des moyens peuvent faire ressortir le, au moins un, coulisseau de cadre (26) hors de la cavité de formage (16) à un moment précis en leur faisant effectuer une course définie (56, 60).

7. Dispositif selon la revendication 6, **caractérisé en ce que** le, au moins un, coulisseau de cadre (26) comprennent au moins deux pièces (30, 32) qui peuvent être ressorties de la cavité de formage (16) à des moments précis différents.

8. Dispositif selon l'une des revendications précédentes, **caractérisé en ce que** les, au moins deux, pièces (30, 32) du coulisseau de cadre (26) peuvent ressortir de la cavité de formage (16) avec des courses définies différentes (56, 60).

9. Dispositif selon l'une des revendications précédentes, **caractérisé en ce qu'**une zone de jonction (24) peut être dégagée entre la première partie de cavité de formage (36) et la deuxième partie de cavité de formage (38) au moyen du, au moins un, coulisseau de cadre (26).

10. Dispositif selon l'une des revendications précédentes, **caractérisé en ce que** le coulisseau de cadre (26) comporte des parties de contour dirigées dans la direction de la première matrice (12) qui servent à agencer la zone de jonction (24).

11. Dispositif selon la revendication 10, **caractérisé en ce que** le coulisseau de cadre présente (26) au moins un degré (44, 46).

12. Dispositif selon l'une des revendications précédentes, **caractérisé en ce que** le coulisseau de cadre (26) comporte deux pièces (30, 32), chacune des pièces (30, 32) présentant un degré (44) ou (46) qui sont tournés l'un vers l'autre.

13. Dispositif selon la revendication 12, **caractérisé en ce que** les degrés (44, 46) ont des hauteurs différentes.

14. Dispositif selon l'une des revendications précédentes, **caractérisé en ce qu'**au moins deux dispositifs, notamment des buses, des tiges ou analogues, dans lesquels il est possible d'injecter successivement la deuxième fonte (42) sont associés au moins à chacune des deuxièmes parties de cavité de formage (38).

15. Dispositif selon la revendication 14, **caractérisé en ce qu'**il est possible d'injecter la deuxième fonte (42) en direction de la zone de jonction (24) successivement dans les, au moins deux, dispositifs.

16. Pièce moulée en matière plastique avec support de matière plastique (40, 42) comprenant au moins deux zones parmi lesquelles au moins une zone est habillée d'un matériau de recouvrement (22) et au moins une zone voisine de la précédente est brute d'injection, **caractérisée en ce que** le support de matière plastique (40) de la zone brute d'injection enveloppe une extrémité (50, 52) d'un bord (34) du matériau de recouvrement (22) d'une zone voisine et **en ce que** le support de matière plastique (42) de la zone habillée de matériau de recouvrement (22) recouvre au moins par endroits le support de matière plastique (40) de la zone brute d'injection voisine.

17. Pièce moulée en matière plastique selon la revendication 16, **caractérisée en ce que** la pièce moulée en matière plastique comprend plusieurs zones habillées de matériaux de recouvrement (22) éventuellement différents entre lesquelles il y a respectivement une zone brute d'injection.

18. Pièce moulée en matière plastique selon l'une des revendications précédentes, **caractérisée en ce que** les supports de matière plastique (40, 42) situés dans les zones habillées et/ou dans les zones brutes d'injection sont constitués de matières synthétiques différentes.

19. Pièce moulée en matière plastique selon l'une des revendications précédentes, **caractérisée en ce que** le support de matière plastique (42) de la zone habillée chevauche le support de matière plastique (40) de la zone brute d'injection au niveau de son bord.

20. Pièce moulée en matière plastique selon la revendication 19, **caractérisée en ce que** le support de matière plastique (42) de la zone habillée chevauche le bord du support de matière plastique (40) de la zone brute d'injection en formant des degrés.

21. Pièce moulée en matière plastique selon la revendication 20, **caractérisée en ce qu'**au moins un degré descend en direction du support de matière plastique (40).

22. Pièce moulée en matière plastique selon l'une des revendications 20 et 21, **caractérisée en ce que** les degrés s'étendent le long d'une zone de jonction (24) située entre les supports de matière plastique (40) et (42).
